# EUROPÄISCHE PATENTSCHRIFT

(11) **EP 4 562 314 B1**
(45) Veröffentlichungstag und Bekanntmachung des Hinweises auf die Patenterteilung: **25.02.2026**
(21) Anmeldenummer: 23748512.3
(22) Anmeldetag: 27.07.2023
(51) Int. Cl.: F16B 45/00

(54) **BABYWIEGEN-HAKENSYSTEM**
BABY-CRADLE HOOK SYSTEM
SYSTÈME DE CROCHET POUR BERCEAU DE BÉBÉ

(30) Priorität: 28.07.2022 DE 102022118910
(43) Veröffentlichungstag der Anmeldung: 04.06.2025
(73) Patentinhaber: EXPLICATIS GMBH, 50858 Köln (DE)
(72) Erfinder: KELLER, René, 50858 Köln (DE); HOLTERHOFF, Annalena, 50969 Köln (DE)
(74) Vertreter: Müller Schupfner & Partner Patent- und Rechtsanwaltspartnerschaft mbB (Muc)
(86) Internationale Anmeldenummer: PCT/EP2023/070811
(87) Internationale Veröffentlichungsnummer: WO 2024/023200

(56) Entgegenhaltungen:
- DE-C- 643 841
- DE-C- 822 224
- FR-A1- 2 324 931
- SWING2SLEEP GMBH: "Aufbau Federwiegen Motor Maly", 27 October 2021 (2021-10-27), XP093093230, Retrieved from the Internet <URL:https://www.youtube.com/watch?v=J9U4oDrmOE0> [retrieved on 20231019]
- WUNDERWIEGE: "Federwiegenmotor WUWI - Aufbauvideo & Inbetriebnahme", 22 November 2021 (2021-11-22), XP093093187, Retrieved from the Internet <URL:https://www.youtube.com/watch?app=desktop&v=4vCVyFDmCm0> [retrieved on 20231019]

## Beschreibung

Die vorliegende Erfindung betrifft ein Babywiegen-Hakensystem zum Verbinden einer beweglichen Babywiege mit einem Halteelement, ein Federwiegensystem für ein Baby oder Kleinkind und eine Verwendung des Babywiegen-Hakensystems bei einem ein Federwiegensystem für ein Baby oder Kleinkind.

Es sind Kinderwiegen bekannt, die dazu genutzt werden, ein Baby oder Kleinkind darin aufzunehmen. So kann eine solche Federwiege als Schlafplatz für ein Baby genutzt werden. Besonders vorteilhaft hat sich herausgestellt, wenn die Federwiegen eine gewisse Bewegung ausführen. Hierbei fühlt sich das Baby besonders wohl, beruhigt sich und schläft zügiger ein. Jedoch besteht bei sich bewegenden Elementen immer die Gefahr, dass es zu einem Versagen einzelner Bauteile kommt, was in Verbindung mit Babys oder Kleinkindern besonders verheerend sein kann. Insbesondere eine Schnittstelle zwischen einem sich bewegenden Element der Federwiege und einem relativ dazu feststehenden Element wirkt hierbei ein gewisses Gefahrenpotenzial, beispielsweise aufgrund von Absplitterungen bei Metall-Metall-Kontakt. Um einen breiten Einsatzbereich der Federwiegen zu gewährleisten (beispielswiese für unterschiedlich schwere oder große Babys oder Kleinkinder) ist es wünschenswert, dass einzelne Bauteile einer solchen Federwiege problemlos durch den Endnutzer getauscht werden können. Ein Babywiegen-Hakensystem ist beispielsweise aus der XP093093230 bekannt.

Daher ist es eine Aufgabe der vorliegenden Erfindung, ein Verbindungsystem zwischen einem beweglichen Teil einer Federwiege und einem relativ dazu feststehenden Teil der Federwiege bereitzustellen, welches eine sichere Verbindung bereitstellt und gleichzeitig dennoch eine Auswechselbarkeit realisiert.

Die vorliegende Erfindung löst dieses Problem mit einem Babywiegen-Hakensystem mit den Merkmalen des Anspruchs 1, mit einem Federwiegensystem mit den Merkmalen des Anspruchs 14, und mit einer Verwendung des Babywiegen-Hakensystems mit den Merkmalen des Anspruchs 15 wie nachfolgend beschrieben.

Gemäß einem Aspekt der vorliegenden Erfindung wird ein Babywiegen-Hakensystem zum Verbinden einer beweglichen Babywiege mit einem Halteelement in einer Hauptrichtung bereitgestellt. Das Hakensystem kann einen ersten Hakenabschnitt mit einem ersten Haltebereich zum Halten eines Halteteils der Babywiege umfassen. Das Hakensystem kann einen zweiten Hakenabschnitt mit einem zweiten Haltebereich zum Halten eines im Querschnitt rechteckigen Halteteils des Halteelements und mit einem zweiten Einführbereich zum Einführen des Halteteils des Halteelements in den Haltebereich umfassen. Der zweite Haltebereich kann so ausgestaltet sein, dass das Halteteil des Halteelements nur in einer ersten Orientierung in dem Haltebereich gehalten werden kann. Der zweite Einführbereich kann so ausgestaltet sein, dass das Halteteil des Halteelements nur in einer zweiten Orientierung in einer Einführrichtung, den Einführbereich passieren kann. Vorzugsweise unterscheiden sich die erste Orientierung und die zweite Orientierung.

Demgemäß kann eine sichere Verbindung zwischen einer beweglichen Babywiege und einem relativ dazu feststehenden Halterelement durch das Hakensystem realisiert sein. Genauer gesagt kann es somit notwendig sein, das Hakensystem um/entlang eine(r) bestimmte(n) Achse oder Kurve zu verdrehen, um das Halteteil des Halteelements aus dem zweiten Hakenabschnitt zu entfernen. Aufgrund der definierten Relativbewegung zwischen Halteteil des Halteelements und Hakenabschnitt kann vermieden werden, dass sich das Hakensystem von alleine löst. Damit kann die Sicherheit der Verbindung zwischen Babywiege und Halteelement erhöht sein. Ferner kann durch die Möglichkeit, das Hakensystem durch eine bestimmte Bewegung dennoch von dem Halteelement zu lösen, eine einfache Austauschbarkeit des Hakensystems und/oder anderer Bauteile gewährleistet sein. Damit kann die Bedienbarkeit insgesamt verbessert sein.

Die bewegliche Babywiege oder Federwiege kann eine Korbstruktur, eine Tuchstruktur bzw. Baby-Hängematte oder dergleichen sein, in welche ein Baby oder ein Kleinkind hineingelegt werden kann. Ferner kann die Babywiege ein elastisches Element wie beispielsweise eine Feder oder dergleichen umfassen. So kann die Feder durch das Gewicht der Babywiege und des darin aufgenommenen Babys unter Spannung gesetzt werden, sodass sich das Federelement auslenkt. Mit anderen Worten kann das elastische Element elastisch verformt sein. Durch eine dann aufgebrachte externe Kraft (beispielsweise durch eine Antriebseinheit oder durch einen Nutzer) kann die Babywiege schwingen. Daher kann die Babywiege als ein bewegliches Element bezeichnet sein. Mit anderen Worten kann sich die Babywiege während eines Betriebs in der Schwererichtung auf und ab bewegen. Das Halteelement der Babywiege kann beispielsweise ein Bügel an dem elastischen Element sein. Somit kann die Babywiege mittels des elastischen Elements mit dem Hakensystem in verbunden sein. Das Hakensystem wiederum kann an einem Halteelement festgelegt sein, wodurch die Babywiege gehalten werden kann. Das elastische Element (z.B. ein Federelement) der Babywiege kann austauschbar sein. So kann, basierend auf dem Gewicht des Babys, ein passendes elastisches Element eingesetzt werden, um den optimalen Betrieb der Federwiege realisieren zu können. Die bewegliche Babywiege kann mit dem Halterelement in einer Hauptrichtung verbunden sein. Die Hauptrichtung kann hierbei im Wesentlichen der Schwererichtung entsprechen. Der erste und der zweite Hakenabschnitt können dazu ausgestaltet sein, eine Last aufzunehmen. Der erste Hakenabschnitt und der zweite Hakenabschnitt können so ausgestaltet sein, dass bei einem Eingriffszustand (d.h. einem Zustand, bei dem ein Verbindungpartner in dem ersten Hakenabschnitt und ein anderer Verbindungspartner in dem zweiten Hakenabschnitt aufgenommen ist) die Babywiege und das Haltelement so halten, dass diese nicht von selbst in der Hauptrichtung voneinander gelöst werden können. Der erste Hakenabschnitt kann ein im Wesentlichen gebogener J-förmiger Abschnitt sein. In den ersten Hakenabschnitt kann das Halteteil der Babywiege (beispielsweise ein Teil des elastischen Elements) aufgenommen werden und gehalten werden. Halten kann hierbei bedeuten, dass das Halteteil lagefixiert bzw. - gesichert und in dem ersten Hakenabschnitt (genauer gesagt in dem ersten Haltebereich) festgelegt ist. Dadurch kann das elastische Element in der Hauptrichtung belastet werden, ohne dass sich die Verbindung zwischen dem Halteteil der Babywiege und dem Hakensystem löst. Der zweite Hakenabschnitt kann ein im Wesentlichen gebogener J-förmiger Abschnitt sein. Der zweite Hakenabschnitt kann einen zweiten Haltebereich zum Halten eines Halteteils des Halteelements aufweisen. Das Halteteil des Halteelements kann einen im Wesentlichen rechteckigen Querschnitt aufweisen, welcher jedoch zweckmäßigerweise fertigungsbedingte Rundungen aufweisen kann. Mit anderen Worten kann das Halteteil des Halteelements einen Polygonkörper mit definierten Ecken (d. h. ohne nicht-fertigungsbedingte Rundungen bzw. Rundungen mit einem Rundungsradius größer 2mm) aufweisen. Somit kann eine Orientierung des Halteteils des Halteelements bei einem Einführen in das Hakensystem sowie bei einem Halten durch das Hakensystem definiert sein. Mit anderen Worten kann es jeweils nur eine Orientierung des Halteteils relativ zu dem zweiten Hakenabschnitt geben, in welcher das Halteteil in den zweiten Hakenabschnitt eingeführt und in dem zweiten Hakenabschnitt gehalten werden kann. Das Halteelement kann ein Steg sein, der in seinem Querschnitt einen eckigen Querschnitt aufweist. Der zweite Haltebereich des zweiten Hakenabschnitts kann dabei so dimensioniert sein, dass das Halteteil des Halteelements in genau einer Orientierung in dem Haltebereich gehalten sein kann. Der zweite Einführbereich des zweiten Hakenabschnitts kann eine Zugangsöffnung zu dem Haltebereich sein. Mit anderen Worten muss das Halteteil des Halteelements durch diesen Einführbereich geführt werden, um den Haltebereich zu erreichen. Ist das Halteteil des Halteelements in dem Haltebereich angelangt, kann sich das Halteteil des Halteelements in einer Finalposition befinden. Die Position, bei der sich das Halteteil des Halteelements in dem Einführbereich des zweiten Hakenabschnitts befindet, kann als Einführposition bezeichnet werden. Das Hakensystem kann ein plattenartiges Element sein, welches sich in einer ersten Hakenebene erstreckt. Das Haltelement kann ein plattenartiges Element sein, welches sich ein einer Halteelementebene erstreckt. Bei einem Zusammenführen des Hakensystems und des Haltelements können die erste Hakenebene und die Haltelementebene im Wesentlichen orthogonal zueinanderstehen (d.h. sowohl in der Finalposition als auch in der Einführposition). Im Wesentlichen kann hierbei bedeuten, dass eine Abweichen von ±5° noch als orthogonal angesehen wird. Das Hakensystem kann eine zweite Hakenebene aufweisen, welche orthogonal zu der ersten Hakenebene ist. Ferner ist kann das Hakensystem und das Haltelement so zusammenwirken bzw. so ausgestaltet sein, dass die zweite Hakenebene in der Einführposition parallel zu der Halteelementebene ist und in der Finalposition orthogonal zu der Halteelementebene. Somit kann realisiert sein, dass das Hakensystem und das Haltelement in einer bestimmten Art und Weise relativ zueinander bewegt werden müssen, um das Haltelement mit dem Hakensystem in Eingriff zu bringen. Das Halteteil kann seine größte Erstreckung in der Haltelementebene aufweisen. Insbesondere kann die Haltelementebene und die zweite Hakenebene zwischen der Finalposition und der Einführposition um ungefähr 90° verschwenkt werden, wobei "ungefähr 90°" Abweichungen von ±5° beinhaltet. Nach der Verschwenkung (z.B. nach der Umorientierung des Halteteils des Halteelements) kann das Halteteil in dem Haltebereich des zweiten Hakenabschnitts eingeführt werden. Ist das Halteteil des Halteelements in dem zweiten Haltebereich angeordnet, kann durch die Ausgestaltung des Haltebereichs verhindert werden, dass sich das Halteteil des Halteelements verschwenkt, wobei "verschwenkt" vorzugsweise eine Verschwenkung von mehr als ±5° bedeutet. Mit anderen Worten kann in der Finalposition des Halteteils verhindert werden, dass das Halteteil in eine andere Orientierung zurückgelangt. Nichtsdestotrotz kann der Halterbereich so ausgestaltet sein, dass die Haltelementebene und die zweite Hakenebene um bis zu ±20° verschwenkt werden können. Dadurch kann verhindert werden, dass sich bei einem Vorsehen mehrerer Hakensysteme nebeneinander diese verklemmen. Durch die Ausgestaltung des Hakensystems kann ein ungewolltes lösen des Halteteils des Halteelements verhindert werden. Mit anderen Worten kann die Lage der Haltelementebene und der zweiten Hakenebene (d.h. die Lage des Halteteils und die Lage des Hakenelements relativ zueinander) als Orientierung bezeichnet werden. Damit kann ein Hakensystem bereitgestellt werden, welches ein ungewolltes Lösen von einem Halteteil zuverlässig verhindern kann aber dennoch bei einer definierten Bewegung eine Trennung der Verbindungspartner problemlos zulässt.

Vorzugsweise unterscheiden sich die erste Orientierung und die zweite Orientierung hinsichtlich ihrer Winkelposition, vorzugsweise orthogonal, zu der Hauptrichtung. Mit anderen Worten kann sich die erste Orientierung die zweite Orientierung des Halteteils des Halteelements relativ zu dem zweiten Hakenabschnitt hinsichtlich einer Verdrehung unterscheiden. Die Winkelposition kann zwischen der Haltelementebene und der zweiten Hakenebene definiert sein. Einfach ausgedrückt kann sich die Orientierung, in der ein Element in den zweiten Einführbereich passieren kann unterschiedlich ist zu einer Orientierung, in dasselbe Element in dem zweiten Haltebereich gehalten ist. Der Ausdruck, wonach die Winkelposition orthogonal zu der Hauptrichtung definiert ist, besagt bevorzugt, dass in der ersten Orientierung und in der zweiten Orientierung zwei Freiheitsgrade identisch sind. Somit kann sichergestellt sein, dass der Einführbereich durch das Halteteil des Halteelements nur dann passiert werden kann, wenn das Halteteil des Halteelements in der zweiten Orientierung ausgerichtet ist. Somit kann ein ungewolltes lösen des Halteteils des Halteelements und des zweiten Hakenabschnitt verhindert werden. Somit kann die Sicherheit der Verbindung gesteigert sein.

Vorzugsweise unterscheiden sich die erste Orientierung und die zweite Orientierung um zumindest 45°, vorzugsweise um zumindest 60°, stärker bevorzugt, um ungefähr 90°. Bei einem Unterschied zwischen der ersten Orientierung und der zweiten Orientierung von zumindest 45° kann sichergestellt sein, dass entweder der zweite Hakenabschnitt oder das Halteteil des Halteelements so weit umgelagert bzw. bewegt werden muss, dass beide voneinander gelöst werden können. Dadurch kann vermieden werden, dass durch übliches Spiel und/oder Toleranzen das Halteteil des Halteelements und der zweite Hakenabschnitt ungewollt voneinander gelöst werden. Ferner kann somit ein gewisses Spiel bereitgestellt werden, sodass verhindert werden kann, dass das Hakensystem verkantet. Bei elektrisch angetriebenen Babywiegen hat sich herausgestellt, dass ein Winkelunterschied von zumindest 60° vorteilhaft ist. Dies ist dadurch begründet, da die Federwiege, in welcher das Baby aufgenommen ist, aktiv durch eine Antriebseinheit in der Vertikalrichtung (d. h. in der Schwererichtung) bewegt wird, wodurch eine größere Auslenkung des Hakensystems bewirkt werden kann. Bei zumindest 60° Winkelunterschied kann sichergestellt sein, dass auch bei einer solchen Bewegung die Verbindung zwischen dem zweiten Hakenabschnitt und dem Halteteil des Halteelements gelöst wird. Bei einem Winkelunterschied von ungefähr 90° kann zudem sichergestellt sein, dass eine ungewollte Manipulation (beispielsweise durch größere Geschwister des in der Babywiege aufgenommenen Babys (das Hakensystem von dem Halteelement gelöst wird. Mit anderen Worten kann bei einem Winkel Unterschied von ungefähr 90° eine definierte Bewegung des Hakensystems notwendig sein, um dieses zu lösen. Ungefähr 90° kann bedeuten, dass ein Winkelunterschied von 90° +/- 5° vorliegt. Somit kann die Herstellung vereinfacht werden, da effiziente Toleranzen genutzt werden können.

Vorzugsweise ist der zweite Haltebereich von dem zweiten Einführbereich in der Hauptrichtung beabstandet. Mit anderen Worten muss das Halteteil des Halteelements und das Hakensystem relativ zueinander entgegengesetzt der Schwererichtung (d. h. in der Hauptrichtung) bewegt werden, um voneinander gelöst zu werden. Somit kann sichergestellt sein, dass durch eine Beaufschlagung des Hakensystems mit einer Last, das System in einem verbundenen Zustand gehalten wird. Erst bei einer entgegenwirkenden Kraft (d.h. entgegen der Schwererichtung) kann das Hakensystem (d.h. der zweite Hakenabschnitt), so bewegt werden, dass das Halteteil des Halteelements zu dem Einführbereich gelangen kann. Dadurch ist die Sicherheit gegen ein ungewolltes Lösen, weiter erhöht.

Vorzugsweise ist der zweite Einführbereich so ausgestaltet, dass die Einführrichtung orthogonal zu der Hauptrichtung ist. Mit anderen Worten muss gemäß dem vorliegenden Aspekt der Erfindung das Halteteil des Haltelements und/oder das Hakensystem so relativ zueinander bewegt werden, dass das Halteteil seitlich in die Einführrichtung bewegt wird. Dadurch kann ein Einführen und ein Ausführen des Halteteils des Haltelements in den zweiten Hakenabschnitt in einer anderen Richtung erfolgen vergleichen mit der Belastungsrichtung. Dadurch können die Elemente einfacher zusammengeführt werden und bei einer Belastung sicher gehalten sein.

Vorzugsweise weist der erste Hakenabschnitt einen ersten Einführbereich zum Einführen des Halteteils der Babywiege in den ersten Haltebereich auf, und vorzugsweise weist der erste Einführbereich einen größeren Einfuhrquerschnitt auf, als der zweite Einführbereich. In den ersten Haltebereich des ersten Hakenabschnitts kann ein Teil eines elastischen Elements (wie beispielsweise einer Feder) eingeführt werden. Das elastische Element kann beispielsweise mit einer externen Sicherungseinrichtung an dem Hakensystem gesichert werden. Dadurch ist es nicht notwendig den ersten Einführbereich des ersten Hakenabschnitts so auszugestalten, dass ein Halteteil nur in einer bestimmten Orientierung durchgeführt werden kann. Stattdessen kann es ausreichend sein, den ersten Einführbereich so auszugestalten, dass das Halteteil der Babywiege problemlos eingeführt werden kann, um den Haltebereich erreichen. Dadurch kann eine Handhabung des Gesamtsystems vereinfacht sein. Ferner können auch verschieden ausgestaltete elastische Elemente genutzt werden, die beispielsweise ein größer dimensioniertes Halteteil aufweisen.

Vorzugsweise sind der erste Einführbereich und der zweite Einführbereich in dieselbe Richtung, insbesondere orthogonal zu der Hauptrichtung, orientiert. Mit anderen Worten können der erste Einführbereich und der zweite Einführbereich eine Öffnungen aufweisen, die in dieselbe Richtung weisen. Dadurch kann die Handhabung des Gesamtsystems vereinfacht werden, da beide Einführöffnungen aus derselben Richtung betätigt werden können.

Vorzugsweise liegen der erste Haltebereich und der zweite Haltebereich in der Hauptrichtung auf einer Geraden. Dadurch kann eine besonders vorteilhafte Kraftflussrichtung durch das Hakensystem realisiert sein, da eine von dem Halteteil der Babywiege eingebrachte Kraft und gerade direkt auf das Halteteil des Halteelements übertragen werden kann. Dadurch kann eine Verbiegung von dem Hakensystem vermieden werden, wodurch die Dauerhaftigkeit des Hakensystems verbessert ist.

Vorzugsweise kann der zweite Hakenabschnitt einen Drehbereich zwischen dem Einführbereich und dem Haltebereich aufweisen, wobei der Drehbereich vorzugsweise dazu ausgestaltet ist, dass das zweite Halteteil des zweiten Elements von der ersten Orientierung in die zweite Orientierung überführt werden kann. Mit anderen Worten kann zwischen dem Einführbereich und dem Haltebereich des zweiten Hakenabschnitts ein weiterer Bereich vorgesehen sein, welcher dazu ausgestaltet ist, dass sich das Halteteil des Halteelements und der zweiten Hakenabschnitt relativ zueinander verdrehen können. Insbesondere können sich in dem Drehbereich die Haltelementebene und die zweite Hakenebene relativ zueinander verdrehen. Somit kann das Halteteil des Halteelements von der Einführposition in die Halteposition überführt werden. Ferner kann sich der Übergang zwischen dem Drehbereich und dem zweiten Haltebereich verjüngen. Der Bereich zwischen dem Haltebereich in dem Drehbereich kann abgerundet ausgebildet sein, sodass das rechteckig ausgebildete Halteteil des Halteelements vorteilhaft in dem Drehbereich relativ zu dem zweiten Hakenabschnitt, zweckmäßigerweise um eine orthogonal zur Hauptrichtung stehenden Achse, verdreht werden kann. Der Drehbereich kann also sicherstellen, dass das Halteteil des Halteelements innerhalb des zweiten Hakenabschnitts von der ersten Orientierung in die zweite Orientierung überführt werden kann. Dadurch kann sichergestellt sein, dass ein ungewolltes Lösen der Verbindung zwischen dem zweiten Hakenabschnitt und dem Halteteil des Halteelements vermieden ist.

Vorzugsweise weist der Drehbereich eine größere Abmessung orthogonal zu der Hauptrichtung auf, als der zweite Haltebereich. Mit anderen Worten kann der Drehbereich eine größere Dimensionierung als der Haltebereich aufweisen, sodass das Halteteil des Halteelements in dem Drehbereich sowohl in der ersten Orientierung als auch in der zweiten Orientierung angeordnet sein kann. Somit kann der Drehbereich als ein Übergangsbereich zwischen dem Einführbereich (in welchem das Halteteil des Halteelements lediglich in der zweiten Orientierung angeordnet sein kann) und dem Haltebereich (in welchem das Halteteil des Halteelements lediglich in der ersten Orientierung angeordnet sein kann), darstellen. Demgegenüber kann der zweite Haltebereich eine konstante lichte Weite entlang der Hauptrichtung aufweisen, so dass eine zu dem Halteteil korrespondierende Form des zweiten Haltebereichs erreicht ist, so dass sich das Halteteil des Halteelements in dem zweiten Haltebereich nicht verdrehen kann.

Vorzugsweise ist das Hakensystem hinsichtlich der Hauptrichtung und/oder orthogonal dazu unsymmetrisch ausgestaltet. Durch die unsymmetrische Ausgestaltung des Hakensystems kann sichergestellt sein, dass durch eine Bewegung des Hakensystems relativ zu dem Halteteil des Halteelements und/oder zu dem Halteteil der Babywiege nicht beide Hakenabschnitte gleichzeitig gelöst werden können. Dadurch kann die Sicherheit des Systems insgesamt verbessert sein.

Vorzugsweise weist das Hakensystem einen Stegabschnitt auf, der den ersten Hakenabschnitt und zweiten Hakenabschnitt trennt. Der Stegabschnitt kann den ersten Einführbereich und/oder den zweiten Einführbereich definieren. Ferner kann der Stegabschnitt verhindern, dass ein Halteteil von einem Haltebereich direkt in den anderen Halterbereich übergeht. Somit kann sichergestellt sein, dass jedes Halteteil zuerst durch einen Einführbereich hindurchgeführt werden muss. Dadurch ist sichergestellt, dass ein Halteteil nicht ungewollt aus dem Haltebereich gelöst wird.

Vorzugsweise weist das Hakensystem ein Durchgangsloch auf, das dazu ausgestaltet ist, ein Sicherungselement aufzunehmen. Somit kann ein zusätzliches Sicherungselement vorgesehen werden, um bei einem Versagen der Verbindung zwischen dem ersten Hakenabschnitt und/oder dem zweiten Hakenabschnitt und dem jeweils zugeordneten Halteteil ein Herunterfallen der Babywiege zu verhindern. Gemäß einem Aspekt kann das Durchgangsloch an der Seite des ersten Hakenabschnitts an dem Hakensystem vorgesehen sein, sodass die Babywiege mit einem Sicherungselement (beispielsweise eine Sicherungsseil) zusätzlich an dem Durchgangsloch des Hakensystems festgelegt werden kann. Somit kann die Babywiege auch bei einem Versagen des elastischen Elements und/oder des ersten Hakenabschnitt sicher an dem Hakensystem gehalten werden.

Vorzugsweise liegt das Durchgangsloch auf einer Linie mit dem ersten Haltebereich und/oder dem zweiten Haltebereich. Somit kann sichergestellt sein, dass bei einer plötzlichen Lastsituation eines Sicherungselements die Last zuverlässig über das Hakensystem abgetragen werden kann. Dies ist besonders dann gegeben, wenn die Krafteinwirkungspunkte (d.h. das Durchgangsloch und beispielsweise der zweite Hakenabschnitt) auf einer Geraden liegen. Vorzugsweise entspricht eine Richtung der Geraden der Schwererichtung. Dadurch können Momente oder dergleichen vermieden werden. Momente können hierbei auftreten, wenn das Durchgangsloch nicht auf einer Linie, die vorzugsweise entlang der Schwererichtung verläuft, liegt. In solchen Fällen kann es zu Auslenkungen kommen, die zu einem unerwünschten Seitwärtspendeln des Systems führen können.

Vorzugsweise weist das Hakensystem in einem Querschnitt orthogonal zu der Hauptrichtung einen im Wesentlichen rechteckigen Querschnitt auf. Vorzugsweise kann das Hakensystem durch gebogene und gerade Stabelemente gebildet sein. Die Stabelemente können einen Profilquerschnitt aufweisen, der im Wesentlichen rechteckig ist. Im Wesentlichen kann hierbei bedeuten, dass die Kanten auch gefast oder abgerundet ausgebildet sein können. Dadurch kann die Haptik des Hakensystems verbessert sein. Durch den rechteckigen Querschnitt kann ein Verdrehen des Hakenelements relativ zu einem der Halteteile vermieden werden. Insbesondere bei dem Halteteil des Halteelements kann eine Verdrehsicherung vorteilhaft sein, da dadurch ein sicherer Halt gewährleistet ist.

Vorzugsweise sind der erste Hakenabschnitt und der zweite Hakenabschnitt integral ausgebildet. Integral kann hierbei bedeuten, dass der erste Hakenabschnitt und der zweite Hakenabschnitt einstückig (d. h. aus einem Material) ausgebildet sind. Integral kann bedeuten, dass der erste Hakenabschnitt und der zweite Hakenabschnitt nicht zerstörungsfrei voneinander lösbar sind. Dadurch kann die Herstellung vereinfacht sein und eine Haltbarkeit verbessert.

Vorzugsweise weist das Hakensystem ein Schuhelement auf, welches in dem ersten Haltebereich festlegbar ist, sodass der erste Einführbereich durch das Schuhelement verschlossen ist. Das Schuhelement kann ein separates Bauteil sein, das an das Hakensystem lösbar anbringbar ist. Dabei kann das Hakensystem und das Schuhelement nach dem Schlüssel-Schloss-Prinzip ausgestaltet sein, sodass das Schuhelement nur in einer bestimmten Position, an dem Hakensystem anordenbar ist. Das Verschließen des Einführbereichs kann bedeuten, dass das Halteteil der Babywiege nicht mehr aus dem ersten Hakenabschnitt entfernt werden kann, ohne dass das Schuhelement ebenfalls von dem Hakensystem entfernt werden muss. Somit kann eine Sicherheit gegen ein Herausfallen des Halteteils der Babywiege verbessert sein. Das Schuhelement kann beispielsweise mit einem Klippmechanismus an dem Haltesystem befestigt werden. Das Schuhelement kann aus einem elastischen Material gebildet sein. In diesem Fall lässt sich der Klippmechanismus besonders einfach realisieren. Vorzugsweise ist das Schuhelement so ausgebildet, dass es nur (d.h. ausschließlich) in dem ersten Haltebereich festlegbar ist. Mit anderen Worten kann das Schuhelement nicht in dem zweiten Haltebereich festlegbar sein. Somit kann eine Fehlbedienung des Hakensystems ausgeschlossen werden.

Vorzugsweise ist das Schuhelement aus einem anderen Material gebildet, als der erste Hakenabschnitt. Somit kann ein Kontakt von gleichen Materialien zweier unterschiedlicher Elemente vermieden werden. Dadurch kann zum einen einer Kontaktkorrosion und zum anderen eine Geräuschentwicklung vermieden werden. Genauer gesagt kann es durch ein Aufeinandertreffen von gleichartigen Materialien zu einem erhöhten Verschleiß kommen. Ferner kann das Schuhelement dämpfende Eigenschaften aufweisen, da der erste Hakenabschnitt und der zweite Hakenabschnitt maßgeblich für die Stabilität des Hakensystems zuständig sind. Somit kann auch bei einem Bewegen der Babywiege und damit einer Bewegung des Halteteils der Babywiege einen ruhigen Betrieb gewährleisten, da der Schuh jegliche Bewegungen des Halteteils der Babywiege abfedern kann.

Vorzugsweise weist das Schuhelement eine Halterung zum Halten des Halteteils der Babywiege auf. Mit anderen Worten kann das Schuhelement, wenn es an dem ersten Hakenabschnitt festgelegt ist, das Halteteil der Babywiege aufnehmen. Somit kann das Halteteil der Babywiege nur indirekt mit dem ersten Hakenabschnitt in Kontakt sein. Direkt kann das Halteteil der Babywiege mit dem Schuhelement in Kontakt sein. Hierbei kann das Schuhelement für eine Dämpfung und/oder Lagefixierung des Halteteils der Babywiege sorgen, wohingegen der erste Hakenabschnitt für die mechanische Stabilität sorgen kann. Ferner kann die Halterung des Schuhelements individuell auf die Babywiege (beispielsweise auf eine Feder) abgestimmt sein. Somit kann auch bei einem Wechsel der Feder durch einen Tausch des Schuhelements eine einfache Anpassung erfolgen, ohne dass das komplette Hakensystem ausgetauscht werden müsste. Ferner kann die Halterung des Schuhelements das Halteteil der Babywiege in einer bestimmten Position (beispielsweise in einer mittigen Position des ersten Hakenabschnitts) festlegen. Vorzugsweise kann die Halterung des Schuhelements das Halteteil der Babywiege in drei Richtungen fixieren, sodass das Halteteil der Babywiege nur in einer Richtung aus der Halterung des Schuhelements entfernt werden kann. Dies bietet einen besonders sicheren Halt der Babywiege.

Vorzugsweise ist das Schuhelement lösbar an dem ersten Haltebereich festlegbar. Das Schuhelement kann so ausgestaltet sein, dass es durch den ersten Einführbereich in den ersten Haltebereich einführbar ist. In dem ersten Haltebereich kann das Schuhelement beispielsweise durch ein zumindest teilweises Umgreifen eines Umfangs des ersten Hakenabschnitts gehalten werden. Ferner kann das Schuhelement ein Durchgangsloch aufweisen, das, wenn das Schuhelement an dem ersten Haltebereich festgelegt ist, deckungsgleich mit dem Durchgangsloch des Hakensystems ist. Daher kann auch, selbst wenn das Schuhelement vorgesehen ist, ein zusätzliches Sicherungselement an dem Hakensystem (beispielsweise an dem ersten Hakenabschnitt) vorgesehen sein. Ferner kann das Schuhelement einen Griffabschnitt aufweisen, mit dem das Schuhelement einfach von dem ersten Hakenabschnitt gelöst werden kann. Somit ist sichergestellt, dass das Schuhelement zerstörungsfrei und reversibel von dem ersten Hakenabschnitt gelöst werden kann.

Gemäß einem weiteren Aspekt der vorliegenden Erfindung wird ein Federwiegensystem für ein Baby oder Kleinkind bereitgestellt, umfassend ein elastisches Element, an dem eine Babywiege befestigt oder befestigbar ist, mit einem ersten Halteteil. Das Federwiegensystem kann ein Halteelement mit einem zweiten Halteteil umfassen. Das Federwiegensystem kann ein Babywiegen-Hakensystem gemäß einer der obigen Ausgestaltungen umfassen, wobei das Hakensystem das Halteelement mit dem elastischen Element verbindet bzw. mit diesen in Eingriff steht oder gebracht werden kann. Das elastische Element kann beispielsweise eine Feder sein. Vorzugsweise weist das Federwiegensystem fünf elastische Elemente auf, die jeweils mit einem Babywiegen-Hakensystem an dem Halteelement festgelegt sind. Das elastische Element kann an einer dem ersten Halteteil gegenüberliegenden Seite eine Babywiege aufweisen, in die ein Baby oder Kleinkind hineinlegbar ist. Ferner kann das Federwiegensystem eine Antriebseinheit aufweisen, die mit der Babywiege verbunden ist. Die Verbindung kann durch ein Zugelement realisiert sein. Durch ein Antreiben des Zugelements kann die Babywiege in Schwingung versetzt werden.

Vorzugsweise umfasst das zweite Halteteil des Halteelements ein Durchgangsloch mit einer zumindest abschnittsweisen rechteckigen Ausgestaltung. Mit anderen Worten kann das Halteteil ein Durchgangsloch aufweisen, in welches der zweite Hakenabschnitt einführbar ist. Das Durchgangsloch kann eine in der Schwererrichtung (in der Betriebsposition des Federwiegensystems) längliche Form aufweisen. Mit anderen Worten kann das Durchgangsloch in der Schwererichtung länger sein als orthogonal dazu. Dadurch kann das Hakensystem zuverlässig gehalten werden, ohne dass es sich verdreht. Ferner kann das Halteelement eine Dicke aufweisen, die im Wesentlichen der lichten Weite des zweiten Einführbereichs entspricht. Dadurch kann gewährleistet sein, dass sich das Halteteil des Halteelements in dem Eingriffsbereich nicht relativ zu dem Hakensystem verdrehen kann. Somit ist sichergestellt, dass das Halteteil des Halteelements nur in der zweiten Orientierung, den Einführbereich passieren kann. Ein Abstand des Durchgangslochs zu einem Rand des Halteelements kann eine erste Abmessung des Halteteils definieren. Die erste Abmessung des Halteteils kann im Wesentlichen der lichten Weite des Drehbereichs entsprechen. Mit anderen Worten kann das Halteteil des Halteelements in der zweiten Orientierung in dem Drehbereich angeordnet sein. Um jedoch in den Haltebereich des zweiten Hakenabschnitts zu gelangen, muss sich die Orientierung des Halteteils relativ zu dem zweiten Hakenabschnitt ändern. Eine lichte Weite des zweiten Haltebereichs kann im Wesentlichen der Dicke des Halteelements entsprechen. Dadurch kann durch eine 90° Drehung des Halteelements relativ zu dem Hakenabschnitt bewirkt werden, dass das Halteteil des Halteelements in den zweiten Haltebereich des zweiten Hakenabschnitts gelangt. Die erste Länge des Halteelements verhindert nun, dass sich das Halteelement relativ zu dem Hakenabschnitt verdreht, solange das Halteteil in dem Haltebereich aufgenommen ist.

Gemäß einem weiteren Aspekt der vorliegenden Erfindung wird eine Verwendung des Babywiegen-Hakensystems gemäß einer der obigen Ausgestaltungen bei einem Federwiegensystem für ein Baby oder Kleinkind zur Verbindung eines Halteelements mit einem elastischen Element bereitgestellt.

Einzelne Ausführungsformen oder einzelne Merkmale von Ausführungsformen oder Aspekten können mit anderen Merkmalen oder anderen Ausführungsformen oder Aspekten kombiniert werden und so neue Ausführungsformen bilden. Die in Zusammenhang mit den jeweiligen Merkmalen genannten Ausgestaltungen und Vorteile gelten analog auch für die neuen Ausführungsformen. Das oben in Verbindung mit der Vorrichtung ausgeführte gilt analog auch für die Verwendung und andersherum.

Im Folgenden werden zu bevorzugende Ausführungsformen mit Bezug auf die beigefügten Figuren im Detail beschrieben. Weitere Ausgestaltungen ergeben sich aus den Figuren. Gleiche Elemente sind in den Figuren mit denselben Bezugszeichen bezeichnet. Es zeigen
- **Fig. 1**: eine perspektivische und schematische Ansicht eines Hakensystems gemäß einer Ausführungsform der vorliegenden Erfindung.
- **Fig. 2**: eine schematische Draufsicht auf ein Hakensystem gemäß einer Ausführungsform der vorliegenden Erfindung.
- **Fig. 3**: eine perspektivische und schematische Ansicht eines Hakensystems und eines Halteelements gemäß einer Ausführungsform der vorliegenden Erfindung.
- **Fig. 4**: eine schematische und perspektivische Ansicht eines Hakensystems und eines Halteelements in einer anderen Position.
- **Fig. 5A**: eine perspektivische und schematische Ansicht eines Schuhelements.
- **Fig. 5B**: eine schematische Draufsicht auf ein Schuhelement gemäß einer Ausführungsform der vorliegenden Erfindung.
- **Fig. 6A**: eine schematische Draufsicht eines Halteelements in einer Draufsicht.
- **Fig. 6B**: eine schematische Draufsicht eines elastischen Elements.
- **Fig. 7**: eine perspektivische und schematische Ansicht eines Hakensystems zusammen mit einem Halteelement und einem elastischen Element gemäß einer Ausführungsform der vorliegenden Erfindung.
- **Fig. 8**: eine perspektivische und schematische Ansicht eines Federwiegensystems gemäß einer Ausführungsform der vorliegenden Erfindung.
- **Fig. 9**: eine perspektivische und schematische Ansicht eines Federwiegensystems gemäß einer Ausführungsform der vorliegenden Erfindung.

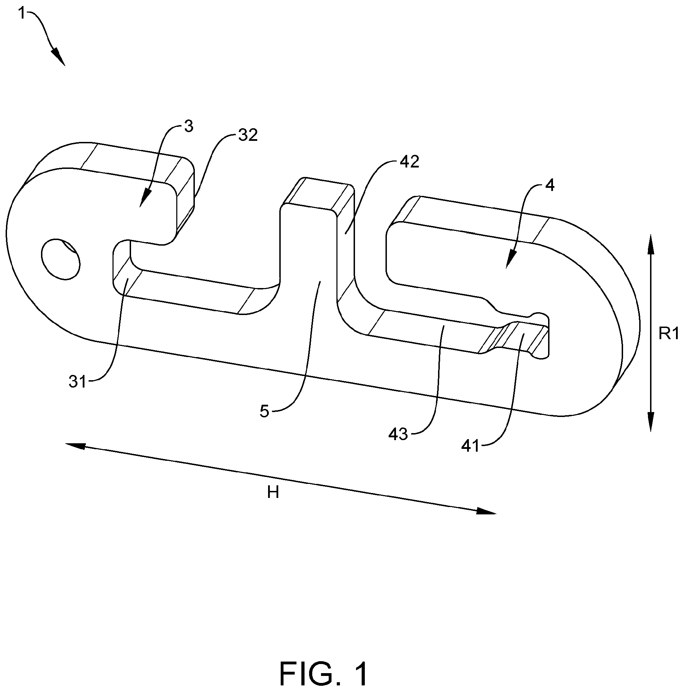

**Fig. 1** ist eine perspektivische und schematische Ansicht eines Babywiegen-Hakensystems 1 gemäß einer Ausführungsform der vorliegenden Erfindung. Das Hakensystem 1 umfasst einen ersten Hakenabschnitt 3 und einen zweiten Hakenabschnitt 4. Der erste Hakenabschnitt 3 weist einen ersten Haltebereich 31 sowie einen ersten Einführbereich 32 auf. Der zweite Hakenabschnitt 4 weist einen zweiten Haltebereich 41 und einen zweiten Einführbereich 42 auf. Der erste Einführbereich 32 und der zweite Einführbereich 42 sind durch einen Steg 5 voneinander getrennt. Der erste Hakenabschnitt 3 und der zweite Hakenabschnitt 4 sind jeweils durch im Wesentlichen rechteckige Stäbe gebildet. Der zweite Hakenabschnitt 4 weist zudem einen Drehbereich 43 auf. Das Hakensystem 1 erstreckt sich hauptsächlich in der Hauptrichtung H. Das Hakensystem 1 ist dazu ausgestaltet, mit dem ersten Hakenabschnitt 3 einen Halteteil einer Babywiege 11 (in Fig. 1 nicht dargestellt) zu halten. Ferner ist das Hakensystem dazu ausgestaltet, mit dem zweiten Hakenabschnitt 4 ein Halteteil 6 eines Halteelements 2 (in Fig. 1 nicht dargestellt) zu halten. Damit kann das Hakensystem 1 eine Babywiege an einem Halteelement festlegen.

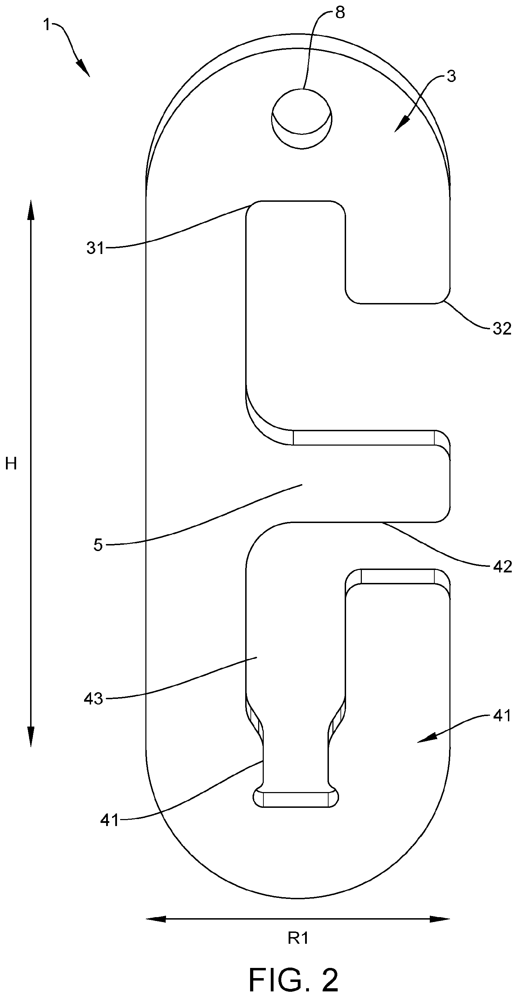

**Fig. 2** ist eine schematische Draufsicht auf das Hakensystem 1 aus Fig. 1. Der zweite Hakenabschnitt 4 weist einen Drehbereich 43 auf. Der Drehbereich 43 hat eine lichte Weite in der Einführrichtung R1, die größer ist als die lichte Weite in der Einführrichtung R1 des Haltebereichs 41. Der Einführbereich 42 hat eine lichte Weite in der Hauptrichtung H, die im Wesentlichen der lichte Weite des Haltebereichs 41 in der Einführrichtung R1 entspricht. Der erste Einführbereich 32 weist eine größere lichte Weite in der Hauptrichtung H hat auf, als der zweite, Einführbereich 42.

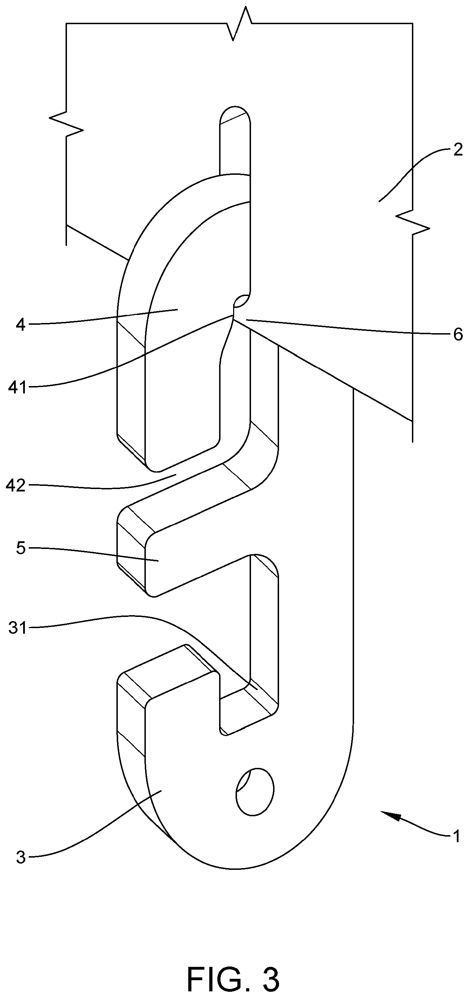

**Fig. 3** ist eine perspektivische und schematische Ansicht eines Hakensystems 1, welches mit einem Halteelement 2 in Eingriff ist. Genauer gesagt greift der zweite Hakenabschnitt 4 um ein Halteteil 6 des Halteelements 2 herum. Das Halteteil 6 des Halteelements 2 weist in der in Fig. 3 dargestellten Position (d.h. die Finalposition) seine größte Erstreckung in der Hauptrichtung H auf. Dadurch kann das Halteteil 6 des Halteelements 2 so in dem Haltebereich 41 des zweiten Hakenabschnitts 4 gehalten sein, dass eine relative Verdrehung des Hakensystems 1 relativ zu dem Halteelement 2 nicht möglich ist. Mit anderen Worten weist die in Fig. 3 dargestellte Konfiguration eine erste Orientierung des Hakensystems relativ zu dem Halteelement auf. In dieser Orientierung ist es nicht möglich, das Hakensystem 1 von dem Halteteil 6 des Halteelements 2 zu lösen.

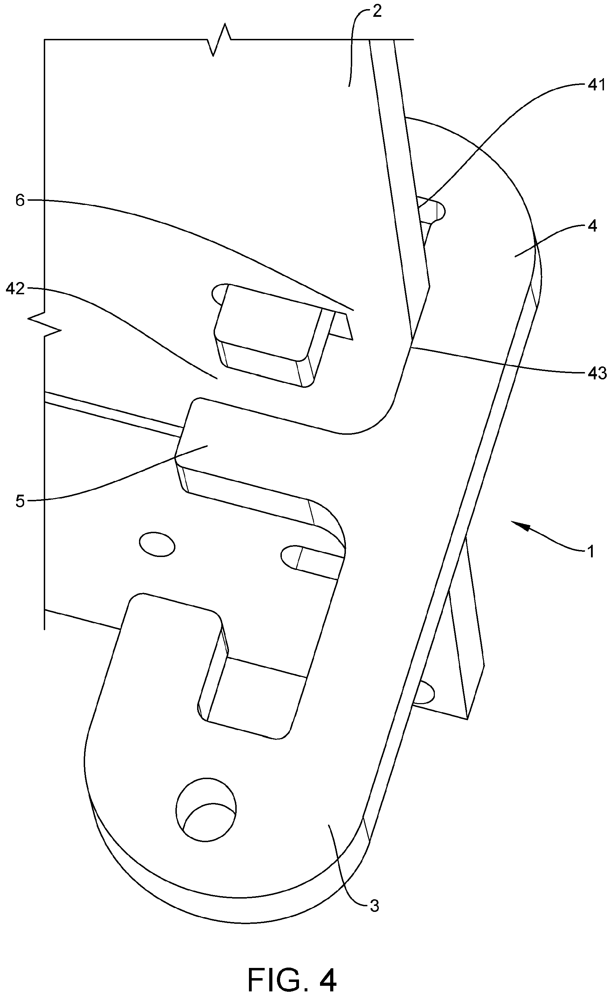

**Fig. 4** ist eine perspektivische und schematische Ansicht des Hakensystems 1, zusammen mit einem Halteelement 2. Genauer gesagt ist in Fig. 4 eine Konfiguration dargestellt, die der zweiten Orientierung entspricht. Genauer gesagt kann das Halteteil 6 des Halteelements 2 soeben durch den Einführbereich 42 in den Umdrehbereich 43 des zweiten Hakenabschnitts 4 in der zweiten Orientierung eingeführt worden sein. Durch die Ausgestaltung des Haltebereichs 41 des zweiten Hakenabschnitts 4 kann das Halteteil 6 des Halteelements 2 jedoch nicht in den Haltebereich 41 eingeführt werden (in der zweiten Orientierung). Dazu muss das Hakensystem 1 relativ zu dem Halteelement 2 verdreht werden, sodass die schmale Seite des Halteteils 6 des Halteelements 2 in die Hauptrichtung H zeigt. Dann kann das Halteteil 6 des Halteelements 2 in den Haltebereich 41 des zweiten Hakenabschnitts 4 eingeführt werden. Der Drehbereich 43 ist dazu ausgestaltet, eine solche Relativbewegung zwischen Hakensystem 1 und Halteelement 2 zuzulassen. Mit anderen Worten ist der Drehbereich 43 der einzige Bereich in dem zweiten Hakenabschnitt 4 sein, in dem sowohl die erste Orientierung als auch die zweite Orientierung des Halteelements relativ zu dem Hakensystem 1 möglich ist.

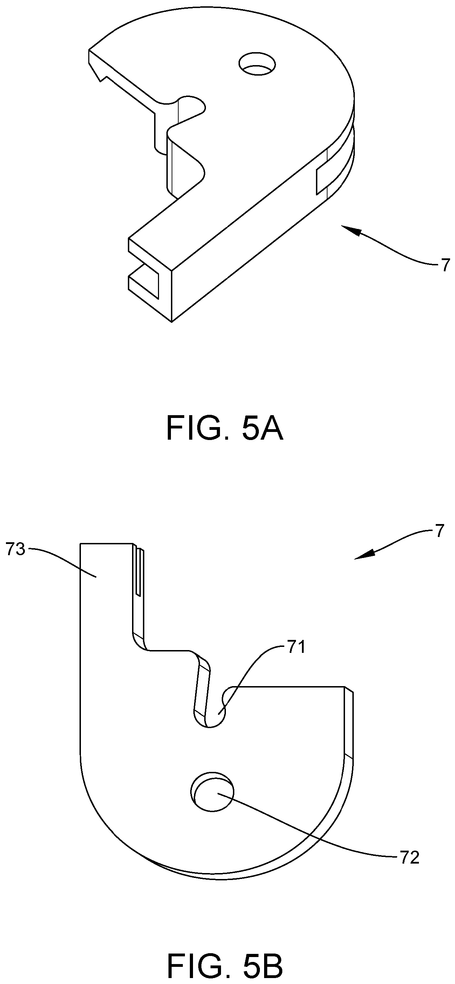

**Fig. 5A** ist eine schematische Ansicht eines Schuhelements 7 gemäß einer Ausführungsform der vorliegenden Erfindung. Des Schuhelement 7 ist ein separates Element und ist aus einem anderen Werkstoff gebildet als der erste Hakenabschnitt 3 und der zweite Hakenabschnitt 4. Das Schuhelement 7 entspricht im Wesentlichen einer Außenkontur des ersten Hakenabschnitts 3. Somit kann das Schuhelement 7 problemlos an dem ersten Hakenabschnitt 3 festgelegt werden. Das Schuhelement 7 kann den ersten Hakenabschnitt zumindest teilweise umgeben. Vorzugsweise ist das Schuhelement 7 aus einem elastischen Werkstoff gebildet. Somit kann das Schuhelement 7 an den ersten Hakenabschnitt 3 angeklipst werden. Folglich ist das Schuhelement 7 zerstörungsfrei an den ersten Hakenabschnitt 3 anbringbar und wieder entfernbar.

**Fig. 5B** ist eine schematische Draufsicht auf das Schuhelement 7 aus Fig. 5A. Das Schuhelement 7 weist eine Halterung 71 zum Halten eines Halteteils 91 der Babywiege auf. Mit anderen Worten kann das Schuhelement 7 das Halteteil 91 der Babywiege halten, wenn das Schuhelement 7 an dem ersten Hakenabschnitt 3 festgelegt ist. Ferner weist das Schuhelement 7 einen Steg 73 auf, der den ersten Einführbereich 31 abdeckt, wenn das Schuhelement 7 an dem ersten Hakenabschnitt 3 angeordnet ist. Somit kann, wenn das Schuhelement 7 an dem ersten Hakenabschnitt 3 angeordnet ist, kein Halteteil aus dem ersten Haltebereich 31 austreten. Ferner weist das Schuhelement 7 ein Durchgangsloch 72 auf. Das Durchgangsloch 72 ist in einem montierten Zustand des Schuhelements 7 an dem ersten Hakenabschnitt 3 deckungsgleich mit dem Durchgangsloch 8 des ersten Hakenabschnitts 3. Durch das Durchgangsloch 72 (bzw. durch das Durchgangsloch 8) kann ein Sicherungselement hindurchgeführt werden, um bei einem Bauteilversagen für zusätzliche Sicherheit zu sorgen.

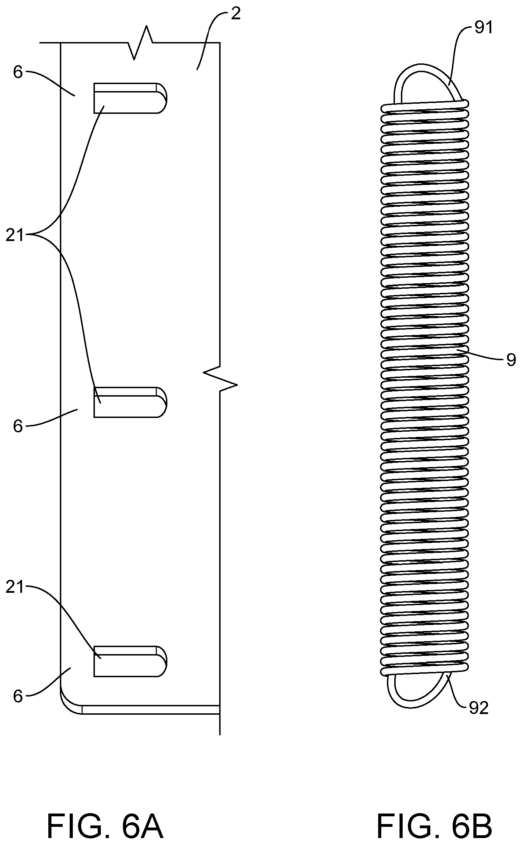

**Fig. 6A** zeigt eine schematische Draufsicht auf eine Halteelement 2 gemäß einer Ausführungsform der vorliegenden Erfindung. Das Halteelement 2 der vorliegenden Ausführungsform weist drei Befestigungslöcher 21 auf. Die Befestigungslöcher 21 definieren jeweils einen Halteteil 6 des Halteelements 2. Bei der vorliegenden Ausführungsform sind die Durchgangslöcher 21 so ausgebildet, dass das Halteteil 6 des Halteelements 2 einen rechteckigen Querschnitt aufweist. Dadurch kann eine Verdrehsicherheit des Hakensystems 1 relativ zu dem Halteelement 2 erreicht werden, wenn das Halteteil 6 des Halteelements 2 in dem Haltebereich 41 des zweiten Hakenabschnitts 4 angeordnet ist.

**Fig. 6B** zeigt eine schematische Ansicht eines elastischen Elements 9 gemäß einer Ausführungsform der vorliegenden Erfindung. Das elastische Element 9 kann Teil einer Babywiege 11 sein. Das elastische Element 9 weist ein Halteteil 91 auf, das durch den ersten Haltebereich 31 und/oder durch die Halterung 71 des Schuhelements 7 gehalten werden kann. An einem diametral gegenüberliegenden Ende des elastischen Elements 9 ist ein weiteres Halteteil 92 vorgesehen, an dem ein Tragetuch oder dergleichen zur Aufnahme eines Babys oder Kleinkinds angeordnet werden kann. Bei der vorliegenden Ausführungsform ist das elastische Element 9 eine Feder.

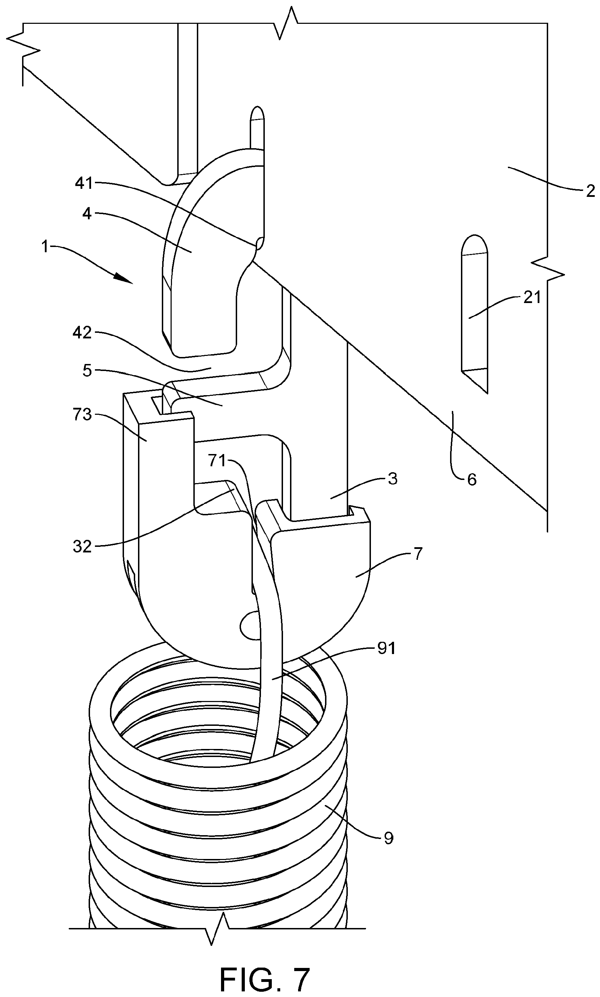

**Fig. 7** ist eine schematische und perspektivische Ansicht eines Hakensystems 1 gemäß einer Ausführungsform der vorliegenden Erfindung. In der in Fig. 7 dargestellten Konfiguration ist das Schuhelement 7 an dem ersten Hakenabschnitt 3 angeordnet. Das Halteteil 91 des elastischen Elements 9 ist in der Halterung 71 des Schuhelements festgelegt. Der Steg 73 verschließt den ersten Einführbereich 32 des ersten Hakenabschnitts 3. Somit ist sichergestellt, dass das Halteteil 91 des elastischen Elements 9, nicht aus dem ersten Hakenabschnitt 3 herausfällt. Das Hakensystem 1 ist mit dem zweiten Hakenabschnitt 4 an einem Halteelement 2 festgelegt. Genauer gesagt ist der erste Hakenabschnitt durch eine Befestigungsöffnung 21 des Halteelements 2 hindurchgeführt. Somit befindet sich das Halteteil 6 des Halteelements 2 in dem Aufnahmebereich 41 des zweiten Hakenabschnitts. In dieser Konfiguration ist eine bewegliche Babywiege zuverlässig mittels dem Hakensystem 1 an einem Halteelement 2 festgelegt.

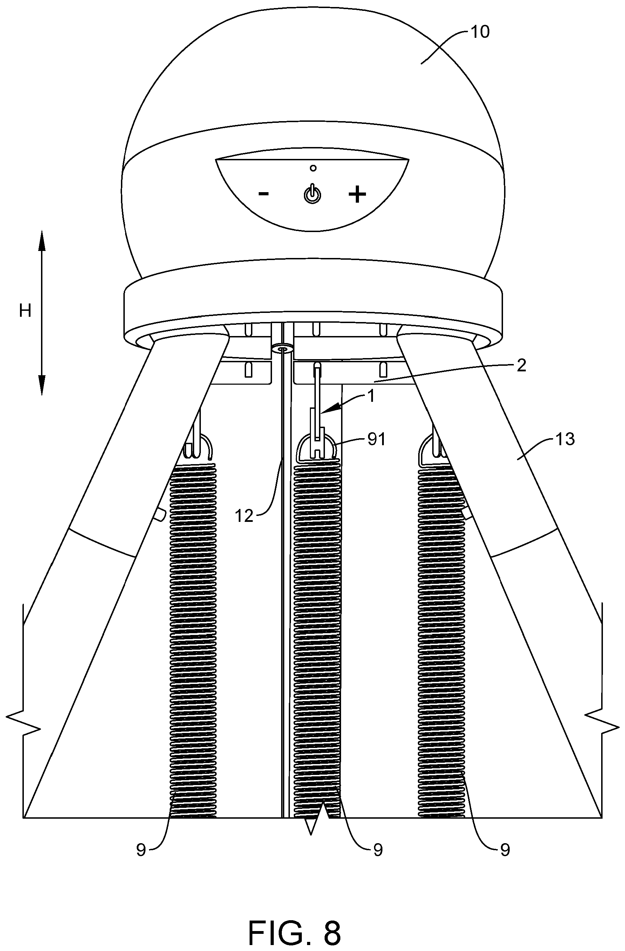

**Fig. 8** ist eine schematische und perspektivische Ansicht eines Federwiegensystems gemäß einer Ausführungsform der vorliegenden Erfindung. Das Federwiegensystem umfasst eine Antriebseinheit 10, die dazu ausgestaltet ist, die Babywiege 11 mit einem Zugelement 12 entgegen der Schwererrichtung (Hauptrichtung H) zu bewegen. Somit kann die Babywiege 11 in Schwingung versetzt werden. Das Halteelement 2 ist bei der vorliegenden Ausführungsform an einem Standbein 13 ausgebildet. Das Standbein 13 ist bei der vorliegenden Ausführungsform ein Dreibein. Somit werden die Hakensysteme 1 (drei bei der vorliegenden Ausführungsform) direkt an dem Halteelement 2, welches an dem Standbein 13 gebildet ist, festgelegt. Auf einer Oberseite des Standbeins 13 (in der Betriebsstellung) ist eine Aufnahmeplattform gebildet, auf der die Antriebseinheit 10 angeordnet werden kann. Das Zugelement 12 tritt durch eine Öffnung in der Aufnahmeplattform hindurch.

Bei einer weiteren nicht dargestellten Ausführungsform ist das Haltelement 2 an der Antriebseinheit 10 gebildet. Hierbei kann die Antriebseinheit 10 auf andere Art und Weise gehalten sein. Beispielsweise kann die Antriebseinheit 10 aufgehängt sein.

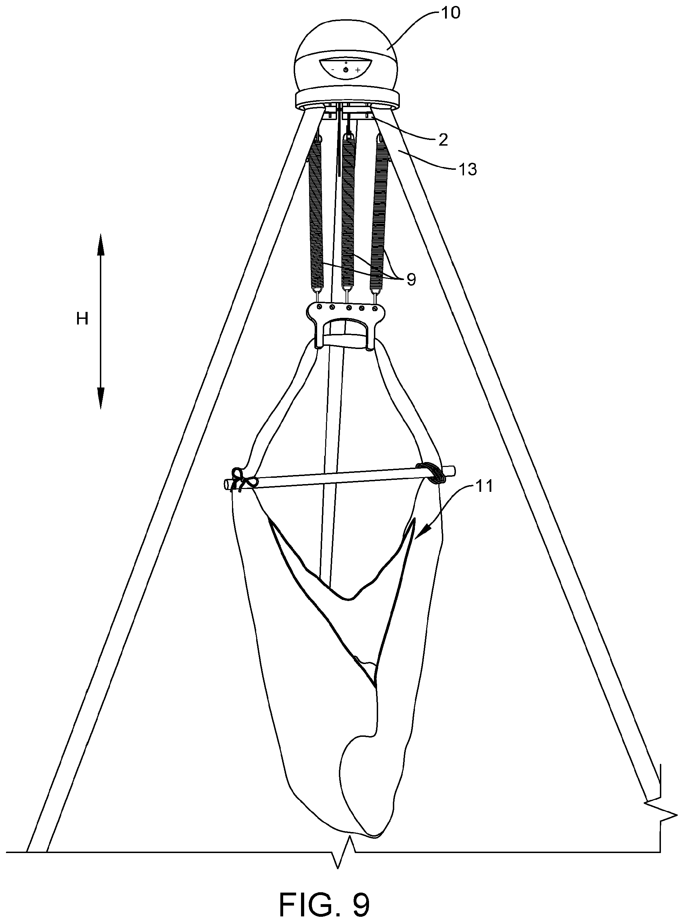

**Fig. 9** ist eine schematische und perspektivische Ansicht eines Federwiegensystems gemäß einer Ausführungsform der vorliegenden Erfindung. Das in Fig. 9 dargestellte Federwiegensystems entspricht dem in Fig. 8 dargestelltem System mit dem Unterschied, dass in Fig. 9 die Babywiege 11 zusätzlich dargestellt ist. Die Babywiege umfasst ein Tragelement für ein Baby oder Kleinkind (im vorliegenden Fall eine Tuchstruktur) und drei elastische Elemente 9 (im vorliegenden Fall drei Federn). Durch eine Anlenkung der Babywiege 11 durch die Antriebseinheit 10 kann die Babywiege 11 in Schwingung versetzt werden.

### Bezugszeichenliste:

- 1: Hakensystem
- 2: Halteelement
- 21: Befestigungslöcher
- 3: erster Hakenabschnitt
- 31: erster Haltebereich
- 32: erster Einführbereich
- 4: zweiter Hakenabschnitt
- 41: zweiter Haltebereich
- 42: zweiter Einführbereich
- 43: Drehbereich
- 5: Steg
- 6: Halteteil
- 7: Schuhelement
- 71: Halterung
- 72: Durchgangsloch
- 73: Steg
- 8: Durchgangsloch
- 9: elastisches Element
- 91: Halteteil
- 92: Halteteil
- 10: Antriebseinheit
- 11: Babywiege
- 12: Zugelement
- 13: Standbein

- H: Hauptrichtung
- R1: Einführrichtung

## Patentansprüche

1. Babywiegen-Hakensystem (1) zum Verbinden einer beweglichen Babywiege (11) mit einem Halteelement (2) in einer Hauptrichtung (H), umfassend:
einen ersten Hakenabschnitt (3) mit einem ersten Haltebereich (31) zum Halten eines Halteteils (91) der Babywiege (11),
einen zweiten Hakenabschnitt (4) mit einem zweiten Haltebereich (41) zum Halten eines im Querschnitt rechteckigen Halteteils (6) des Halteelements (2) und mit einem zweiten Einführbereich (42) zum Einführen des Halteteils (6) des Halteelements (2) in den Haltebereich (41),
wobei der zweite Haltebereich (41) so ausgestaltet ist, dass das Halteteil (6) des Halteelements (2) nur in einer ersten Orientierung in dem Haltebereich gehalten werden kann,
wobei der zweite Einführbereich (42) so ausgestaltet ist, dass das Halteteil (6) des Halteelements (2) nur in einer zweiten Orientierung in einer Einführrichtung (R1) den Einführbereich passieren kann, und
wobei sich die erste Orientierung und die zweite Orientierung unterscheiden.

2. Hakensystem (1) gemäß Anspruch 1, wobei sich die erste Orientierung und die zweite Orientierung hinsichtlich ihrer Winkelposition orthogonal zu der Hauptrichtung (H) unterscheiden.

3. Hakensystem (1) gemäß einem der vorhergehenden Ansprüche, wobei der zweite Haltebereich (41) von dem zweiten Einführbereich (42) in der Hauptrichtung (H) beabstandet ist.

4. Hakensystem (1) gemäß einem der vorhergehenden Ansprüche, wobei der zweite Einführbereich (42) so ausgestaltet ist, dass die Einführrichtung (R1) orthogonal zu der Hauptrichtung (H) ist.

5. Hakensystem (1) gemäß einem der vorhergehenden Ansprüche,
wobei der erste Hakenabschnitt (3) einen ersten Einführbereich (32) zum Einführen des Halteteils (91) der Babywiege (11) in den ersten Haltebereich (31) aufweist, und
wobei der erste Einführbereich (32) einen größeren Einführquerschnitt aufweist als der zweite Einführbereich (42).

6. Hakensystem (1) gemäß einem der vorhergehenden Ansprüche, wobei der zweite Hakenabschnitt (4) einen Drehbereich (43) zwischen dem Einführbereich (42) und dem Haltebereich (41) aufweist, wobei der Drehbereich (43) dazu ausgestaltet ist, dass das zweite Halteteil (6) des zweiten Elements (2) von der ersten Orientierung in die zweite Orientierung überführt werden kann.

7. Hakensystem (1) gemäß einem der vorhergehenden Ansprüche, wobei das Hakensystem (1) hinsichtlich der Hauptrichtung (H) und/oder orthogonal dazu unsymmetrisch ausgestaltet ist.

8. Hakensystem (1) gemäß einem der vorhergehenden Ansprüche, wobei das Hakensystem (1) einen Stegabschnitt aufweist, der den ersten Hakenabschnitt (3) und zweiten Hakenabschnitt (4) trennt.

9. Hakensystem (1) gemäß einem der vorhergehenden Ansprüche, wobei das Hakensystem (1) ein Durchgangsloch (8) aufweist, das dazu ausgestaltet ist, ein Sicherungselement aufzunehmen.

10. Hakensystem (1) gemäß einem der vorhergehenden Ansprüche, wobei der erste Hakenabschnitt (3) und der zweite Hakenabschnitt (4) integral ausgebildet sind.

11. Hakensystem (1) gemäß einem der vorhergehenden Ansprüche, wobei das Hakensystem (1) ein Schuhelement (7) aufweist, welches in dem ersten Haltebereich (31) festlegbar ist, so dass der erste Einführbereich (32) durch das Schuhelement (7) verschlossen ist.

12. Hakensystem (1) gemäß Anspruch 11, wobei das Schuhelement (7) aus einem anderen Material gebildet ist als der erste Hakenabschnitt (3).

13. Hakensystem (1) gemäß Anspruch 11 oder 12, wobei das Schuhelement (7) lösbar an dem ersten Haltebereich (31) festlegbar ist.

14. Federwiegensystem für ein Baby oder Kleinkind, umfassend:
ein elastisches Element (9), an dem eine Babywiege (11) befestigt oder befestigbar ist, mit einem ersten Halteteil (91),
ein Halteelement (2) mit einem zweiten Halteteil (6),
ein Babywiegen-Hakensystem (1) gemäß einem der vorhergehenden Ansprüche, wobei das Hakensystem (1) das Halteelement (2) mit dem elastischen Element (9) verbindet.

15. Verwendung des Babywiegen-Hakensystems (1) gemäß einem der Ansprüche 1 bis 13 bei einem Federwiegensystem für ein Baby oder Kleinkind zur Verbindung eines Halteelements (2) mit einem elastischen Element (9).

## Claims

1. Baby cradle hook system (1) for connecting a movable baby cradle (11) to a holding element (2) in a main direction (H), comprising:
a first hook section (3) with a first holding area (31) for holding a holding part (91) of the baby cradle (11),
a second hook section (4) with a second holding area (41) for holding a holding part (6) of the holding element (2) with a rectangular cross-section and with a second insertion area (42) for inserting the holding part (6) of the holding element (2) into the holding area (41),
wherein the second holding area (41) is designed such that the holding part (6) of the holding element (2) can only be held in the holding area in a first orientation,
wherein the second insertion area (42) is designed such that the holding part (6) of the holding element (2) can only pass through the insertion area in a second orientation in an insertion direction (R1), and
wherein the first orientation and the second orientation differ.

2. Hook system (1) according to claim 1, wherein the first orientation and the second orientation differ in terms of their angular position orthogonal to the main direction (H).

3. Hook system (1) according to any one of the preceding claims, wherein the second holding area (41) is spaced apart from the second insertion area (42) in the main direction (H).

4. Hook system (1) according to any one of the preceding claims, wherein the second insertion area (42) is designed such that the insertion direction (R1) is orthogonal to the main direction (H).

5. Hook system (1) according to any one of the preceding claims,
wherein the first hook section (3) has a first insertion area (32) for inserting the holding part (91) of the baby cradle (11) into the first holding area (31), and
wherein the first insertion area (32) has a larger insertion cross-section than the second insertion area (42).

6. Hook system (1) according to any one of the preceding claims, wherein the second hook section (4) has a rotation area (43) between the insertion area (42) and the holding area (41), wherein the rotation area (43) is designed so that the second holding part (6) of the second element (2) can be transferred from the first orientation to the second orientation.

7. Hook system (1) according to any one of the preceding claims, wherein the hook system (1) is designed to be asymmetrical with respect to the main direction (H) and/or orthogonally thereto.

8. Hook system (1) according to any one of the preceding claims, wherein the hook system (1) has a web section separating the first hook section (3) and the second hook section (4).

9. Hook system (1) according to any one of the preceding claims, wherein the hook system (1) has a through hole (8) designed to accommodate a securing element.

10. Hook system (1) according to any one of the preceding claims, wherein the first hook section (3) and the second hook section (4) are integrally formed.

11. Hook system (1) according to any one of the preceding claims, wherein the hook system (1) has a shoe element (7) which can be fixed in the first holding area (31) so that the first insertion area (32) is closed by the shoe element (7).

12. Hook system (1) according to claim 11, wherein the shoe element (7) is formed from a different material than the first hook section (3).

13. Hook system (1) according to claim 11 or 12, wherein the shoe element (7) can be detachably fixed to the first holding area (31).

14. Spring cradle system for a baby or small child, comprising:
an elastic element (9) to which a baby cradle (11) is or can be attached, with a first holding part (91),
a holding element (2) with a second holding part (6),
a baby cradle hook system (1) according to any one of the preceding claims, wherein the hook system (1) connects the holding element (2) to the elastic element (9).

15. Use of the baby cradle hook system (1) according to any one of claims 1 to 13 in a spring cradle system for a baby or small child for connecting a holding element (2) to an elastic element (9).

## Revendications

1. Système de crochet (1) pour berceau de bébé, destiné à relier un berceau de bébé (11) mobile à un élément de retenue (2) dans une direction principale (H), comprenant :
une première portion de crochet (3) ayant une première zone de retenue (31) destinée à retenir une partie de retenue (91) du berceau de bébé (11),
une deuxième portion de crochet (4) ayant une deuxième zone de retenue (41) destinée à retenir une partie de retenue (6) de section transversale rectangulaire de l'élément de retenue (2) et ayant une deuxième zone d'insertion (42) destinée à insérer la partie de retenue (6) de l'élément de retenue (2) dans la zone de retenue (41),
dans lequel
la deuxième zone de retenue (41) est conçue de telle sorte que la partie de retenue (6) de l'élément de retenue (2) ne puisse être retenue dans la zone de retenue que selon une première orientation,
la deuxième zone d'insertion (42) est conçue de telle sorte que la partie de retenue (6) de l'élément de retenue (2) ne puisse passer la zone d'insertion dans une direction d'insertion (R1) que selon une deuxième orientation, et
la première orientation et la deuxième orientation diffèrent l'une de l'autre.

2. Système de crochet (1) selon la revendication 1,
dans lequel la première orientation et la deuxième orientation diffèrent l'une de l'autre en termes de position angulaire orthogonale par rapport à la direction principale (H).

3. Système de crochet (1) selon l'une des revendications précédentes,
dans lequel la deuxième zone de retenue (41) est espacée de la deuxième zone d'insertion (42) dans la direction principale (H).

4. Système de crochet (1) selon l'une des revendications précédentes,
dans lequel la deuxième zone d'insertion (42) est conçue de telle sorte que la direction d'insertion (R1) soit orthogonale à la direction principale (H).

5. Système de crochet (1) selon l'une des revendications précédentes,
dans lequel la première portion de crochet (3) comprend une première zone d'insertion (32) destinée à insérer la partie de retenue (91) du berceau de bébé (11) dans la première zone de retenue (31), et
la première zone d'insertion (32) présente une section transversale d'insertion plus grande que celle de la deuxième zone d'insertion (42).

6. Système de crochet (1) selon l'une des revendications précédentes, dans lequel la deuxième portion de crochet (4) comprend une zone de rotation (43) entre la zone d'insertion (42) et la zone de retenue (41), la zone de rotation (43) étant conçue de telle sorte que la deuxième partie de retenue (6) du deuxième élément (2) puisse être transférée de la première orientation à la deuxième orientation.

7. Système de crochet (1) selon l'une des revendications précédentes, dans lequel le système de crochet (1) est conçu de manière asymétrique par rapport à la direction principale (H) et/ou orthogonalement à celle-ci.

8. Système de crochet (1) selon l'une des revendications précédentes, dans lequel le système de crochet (1) comprend une portion d'âme qui sépare la première portion de crochet (3) et la deuxième portion de crochet (4).

9. Système de crochet (1) selon l'une des revendications précédentes, dans lequel le système de crochet (1) présente un trou traversant (8) conçu pour recevoir un élément de sécurité.

10. Système de crochet (1) selon l'une des revendications précédentes, dans lequel la première portion de crochet (3) et la deuxième portion de crochet (4) sont formées intégralement.

11. Système de crochet (1) selon l'une des revendications précédentes, dans lequel le système de crochet (1) comprend un élément de sabot (7) qui peut être fixé dans la première zone de retenue (31) de telle sorte que la première zone d'insertion (32) soit fermée par l'élément de sabot (7).

12. Système de crochet (1) selon la revendication 11,
dans lequel l'élément de sabot (7) est formé d'un matériau différent de celui de la première portion de crochet (3).

13. Système de crochet (1) selon la revendication 11 ou 12,
dans lequel l'élément de sabot (7) peut être fixé de manière amovible à la première zone de retenue (31).

14. Système de berceau à ressort pour bébé ou enfant en bas âge, comprenant :
un élément élastique (9) sur lequel un berceau de bébé (11) est fixé ou peut être fixé, ayant une première partie de retenue (91),
un élément de retenue (2) ayant une deuxième partie de retenue (6),
un système de crochet (1) pour berceau de bébé selon l'une des revendications précédentes, le système de crochet (1) reliant l'élément de retenue (2) à l'élément élastique (9).

15. Utilisation du système de crochet (1) pour berceau de bébé selon l'une des revendications 1 à 13 dans un système de berceau à ressort pour bébé ou enfant en bas âge afin de relier un élément de retenue (2) à un élément élastique (9).
